Europäisches Patentamt

European Patent Office

Office européen des brevets

(11) Publication number : **0 465 448 A1**

(12) # EUROPEAN PATENT APPLICATION

(21) Application number : **91850180.0**

(22) Date of filing : **27.06.91**

(51) Int. Cl.⁵ : **A01C 23/00**

(30) Priority : **02.07.90 SE 9002312**

(43) Date of publication of application :
**08.01.92 Bulletin 92/02**

(84) Designated Contracting States :
**AT BE CH DE DK ES FR GB GR IT LI LU NL SE**

(71) Applicant : **HYDRO SUPRA AB**
**P.O. Box 516**
**S-261 24 Landskrona (SE)**

(72) Inventor : **Bertilsson, Göte**
**Alstorp 552**
**S-244 03 Dösjebro (SE)**

(74) Representative : **Holmqvist, Lars J.H.**
**Lars Holmqvist Patentbyra AB Box 4289**
**S-203 14 Malmö 4 (SE)**

(54) **Method and means for spreading e.g. liquid manure on fields by means of ramp and drag hoses.**

(57)    The present invention regards a method and means for spreading out e.g. liquid manure on a field by means of a ramp 1 and drag hoses 4. The object is to achieve an acceptable spreading pattern even with just a few drag hoses 4. This is achieved by giving the drag hoses 4, pivotingly carried on a ramp arm 3, a lateral movement at the forward movement of the ramp 1. This lateral movement may be given by a cord 5 which is actuated by a carrier on a wheel 6 of the ramp 1 in contact with the ground. By connecting the cord 5 with at least one drag hose 4, while the other drag hoses 4 are mutually connected with each other, this lateral movement is given at the forward movement of the ramp 1.

EP 0 465 448 A1

FIG. 1A

FIG. 1B

The present invention regards method and means for improved spreading from ramps provided with pipes, on e.g. fertilizer distributors, irrigation machines etc.

Ramps for pure liquids can be provided with different types of spreading nozzles, in order to obtain acceptably even distribution. Spreading nozzles are unsuitable for e.g. urine and liquid manure. On one hand such material should not be thrown through the air, which give evaporation losses and problems with odour, on the other hand it is difficult to avoid contaminations that disturb the function of a nozzle.

One solution is so-called drag hoses, which place the material directly on the ground. In order to get an acceptably even effect on the crop the distance between the discharge points should not exceed 25-40 cm. There is such technique in practical use.

One drawback is the need for several tubes and conduits (3-4 per m working width). Numerous distributing tubes and small tube diameters give rise to particular problems for this kind of material.

The object of the invention is to achieve an acceptable spreading pattern even with fewer drag hoses.

This is achieved as the drag hoses are given a lateral movement, so that the geometrical pattern on the ground practically looks like a zigzag line. Thereby the distance between the "stripes" is shortened.

The lateral movement is achieved as the hoses directed downwardly are connected by a cord, which is given a suitably reciprocating movement.

The expression "drag hoses" in the text refer to tubes or the like, beside hoses.

In the accompanying drawing:

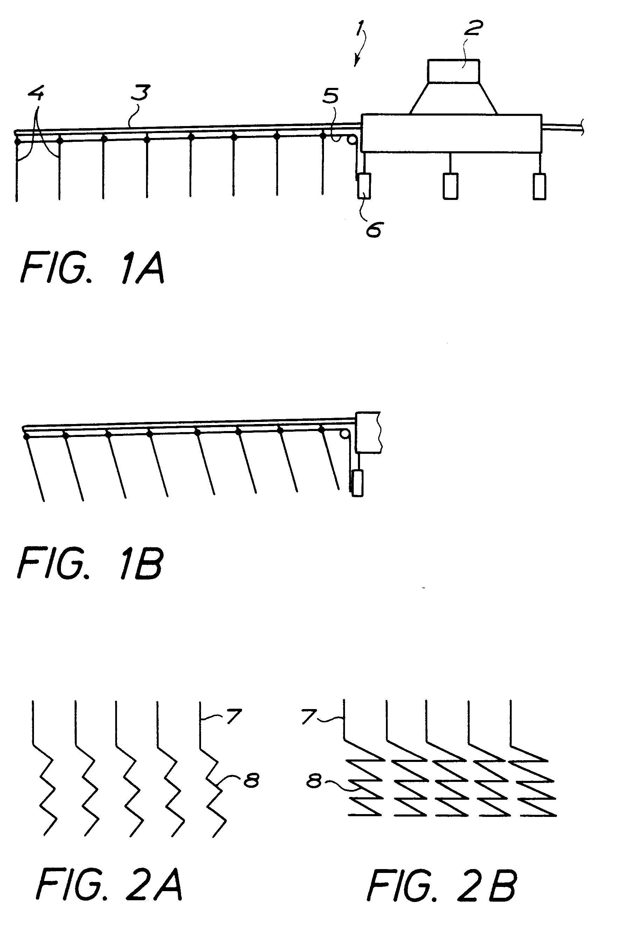

Fig. 1A shows an irrigation ramp according to the invention with mutually connected drag hoses,

Fig. 1B shows the drag hoses according to Fig. 1A displaced sideways, and

Fig. 2 shows the patterns formed by the drag hoses, on one hand without lateral movement and on the other hand with differently powerful lateral movements.

One embodiment is shown in the Figures by which a ramp 1 has a distributor 2 that distributes the agent to be spread on ramp arms 3. In the Figure only one ramp arm 3 is shown. From there the agent is spread by means of drag hoses 4, mutually connected by a cord 5. The cord 5 is actuated by a carrier on a wheel 6 in contact with the ground.

The cord 5 is either connected with all the drag hoses 4 or it is just connected with the hose adjacent to the wheel 6 in contact with the ground. If the cord 5 is only connected to the hose adjacent the wheel 6 all the hoses 4 are mutually connected with cords, links or the like so that a movement of the cord 5 gives a lateral movement of all the drag hoses 4.

An example of a spreading ramp 1 according to the Figures is stated below with measures. The spreading ramp 1 has the height 1.2 m over the ground, the arm length 15 m, and 20 outlets (drag hoses 4) per arm 2. The distance between the discharge points on the ramp is 0,75 m. The stiffened drag hoses 4 are connected with a stretched cord 5, 0.9 m over the ground. The inner end of the cord 5 is attached to a lever arm, abutting against a carrier on the wheels 6 of the ramp in contact with the ground. The movement of the wheel 6 is transferred to the lever arm and then to the cord in such a way that when the ramp has moved 0.2 m on the ground the cord is moved 0.1-0.2 m, whereupon it is quickly released back to its starting position by the dead weight of the drag hoses 4. The lower ends of the drag hoses 4 will then be moved 0.4-0.8 m sideways, while the forward component is 0.2 m. The distance from one row to the next is approximately 0.2 m in the form of a zigzag pattern 8.

As the ramp 1 normally moves forward at the same time as the drag hoses are given the lateral movement a zigzag pattern 8 is obtained with a certain sinus form depending on the speed of the ramp. Without lateral movement only straight rows 7 are obtained.

To avoid, as far as possible, that the cord 5 or any other part of the mechanism for the lateral movement comes into contact with the growing crops on the field these parts are placed as high as practically possible.

The movement of the cord may also be achieved e.g. with a specially driven mechanism if the ramp is self-propelled.

In another, more complex embodiment each drag hose is furnished with a "swinging arm" journalled in the ramp. A cord or other linkage sits in the upper end of the swinging arm, above or in the supporting part of the ramp.

## Claims

1. A method for distribution from ramps by means of drag hoses or the like, **characterized** in that the drag hoses are given a lateral movement at the same time as the ramp moves forward.

2. Means to achieve lateral movement of drag hoses (4) or the like provided on a ramp arm (3) of a moveable ramp (1), **characterized** in that the drag hoses (4) are journalled in the ramp arm (3) and so mutually connected that a lateral movement of one of the drag hoses is transferred to all the drag hoses.

3. Means according to claim 2, **characterized** in that the lateral movement is achieved by a cord (5), connected with the drag hose (4) closest to the wheel (6) of the ramp (1) in contact with the ground, being actuated by a carrier on the wheel (6).

4. Means according to claim 3, **characterized** in that the cord (5) is connected with all the drag hoses (4) on the ramp arms (3).

5. Means according to claim 3, **characterized** in that each drag hose (4) is connected with each adjacent drag hose (4) via a cord.

6. Means according to claim 3, **characterized** in that each drag hose (4) is connected with each adjacent drag hose (4) via a link.

FIG. 1A

FIG. 1B

FIG. 2A

FIG. 2B

EP 0 465 448 A1

| | **European Patent Office** | **EUROPEAN SEARCH REPORT** | Application Number |
| | | | EP 91 85 0180 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0079018 (HUGO VOGELSANG FASS- UND MASCHINENBAU) <br> * page 3, lines 16 - 32; figure 2 * <br> --- | 1 | A01C23/00 |
| Y | DE-U-8207302 (MEIER) <br> * page 1, line 32 - page 2, line 4; figures 1, 2, 4 * <br> --- | 1 | |
| X | DE-U-7703397 (GARBS) <br> * page 2, lines 13 - 17; figure 4 * | 2 | |
| A | <br> --- | 1, 6 | |
| A | BE-A-0401962 (WAGNER) <br> * page 5, lines 10 - 18; claim 13; figures 7, 8 * <br> ----- | 1, 3 | |
| | | | **TECHNICAL FIELDS SEARCHED (Int. Cl.5 )** |
| | | | A01C |

The present search report has been drawn up for all claims

| Place of search | Date of completion of the search | Examiner |
|---|---|---|
| BERLIN | 09 OCTOBER 1991 | MERCKX A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)